# EUROPÄISCHE PATENTSCHRIFT

(11) **EP 0 702 047 B1**
(45) Veröffentlichungstag und Bekanntmachung des Hinweises auf die Patenterteilung: **09.12.1998**
(21) Anmeldenummer: 95112920.4
(22) Anmeldetag: 17.08.1995
(51) Int. Cl.: C08G 69/28, C08G 69/06, C08G 69/30

(54) **Verfahren zur Herstellung hochmolekularer Polyamide aus Nitrilen**
Manufacturing process for high molecular weight polyamides from nitriles
Procédé pour la preparation de polyamides à haut poids moléculaire obtenu à partir de nitriles

(30) Priorität: 27.08.1994 DE 4430480
(43) Veröffentlichungstag der Anmeldung: 20.03.1996
(73) Patentinhaber: BASF Aktiengesellschaft, 67063 Ludwigshafen (DE)
(72) Erfinder: Götz, Walter, Dr., D-67067 Ludwigshafen (DE)

(56) Entgegenhaltungen:
- EP-A- 0 038 094
- EP-A- 0 405 239
- EP-A- 0 479 306
- US-A- 5 185 427

## Beschreibung

Die vorliegende Erfindung betrifft ein verbessertes Verfahren zur Herstellung von hochmolekularen Polyamiden aus Cyanogruppen-haltigen Monomeren durch Polymerisation in an sich bekannter Weise zu Polyamiden mit einem niedrigen Molekulargewicht und anschließende thermische Nachbehandlung zu hochmolekularen Polyamiden.

Die US 2,245,129 beschreibt die Herstellung linearer Polyamide. Hierbei werden Aminonitrile oder eine äquimolare Mischung von Dinitrilen und Diaminen in einem ersten Schritt zunächst zu niedrigmolekularen Polyamiden umgesetzt. In einem darauffolgenden zweiten Schritt werden die niedrigmolekularen Polyamide durch Entfernen von Ammoniak und Wasser bei Atmosphärendruck oder vermindertem Druck thermisch nachkondensiert. Nachteilig an diesem Verfahren ist zum einen die niedrige Polymerisationsgeschwindigkeit bei der Nachkondensation, was sich in einer nur geringen Erhöhung der relativen Viskosität des Endproduktes verglichen mit der relativen Viskosität des niedrigmolekularen Polyamids bei langen Nachkondensationszeiten äußert. Lange Nachkondensationszeiten erhöhen jedoch die Wahrscheinlichkeit einer Schädigung des Polymers und führen zu einem größeren Energieverbrauch und zu niedrigen Raum-Zeit-Ausbeuten. Zum anderen weisen die Endprodukte ein Aminoendgruppen-zu-Carboxylendgruppen-Verhältnis (AEG/CEG) von deutlich größer als 1 auf, was die Schmelzestabilität (Konstanz des Molekulargewichtes) bei der Verarbeitung verschlechtert.

Die DE-A 35 34 817 beschreibt die stufenweise Herstellung von linearen Polyamiden aus omega-Aminoalkylnitrilen und überschüssigem Wasser in Gegenwart katalytisch wirkender Verbindungen. Spinnbare Polyamide werden in der Schmelze in einer Inertgasatmosphäre wie Stickstoff oder bei vermindertem Druck auf die gewünschten höheren Polymerisationsgrade eingestellt. Anschließend wird das so erhaltene Polyamid granuliert, durch Extraktion von Monomeren und Oligomeren befreit und dann getrocknet. Die erzielbaren Molekulargewichte sind auch hier gering und das AEG/CEG-Verhältnis ist ebenfalls deutlich größer als 1.

Die EP-A 479 306 beschreibt die Herstellung von Polyamiden ausgehend von omega-Aminonitrilen in Gegenwart von Wasser und unter kontinuierlicher Zugabe von Wasser, wobei oberhalb von 240°C sowohl Wasserdampf als auch Ammoniak aus dem Reaktionsgemisch entfernt werden. Nach Zugabe einer bestimmten Wassermenge wird die Zufuhr von Wasser gestoppt und bei Temperaturen im Bereich von 240 bis 310°C wird das erhaltene Polyamid bis zum gewünschten Molekulargewicht zu Ende kondensiert. Die Erzielung höherer Molekulargewichte ist aufgrund des autogenen Wasserdampfdruckes, der das Polykondensationsgleichgewicht zu niedrigen Molekulargewichten verschiebt, nicht möglich. Des weiteren ist die Reaktionsgeschwindigkeit - und somit die Raum-Zeit-Ausbeute - nicht hoch genug.

Die EP-A 129 195 beschreibt die Herstellung hochmolekularer Polyamide. Aus einer Mischung bestehend aus Diaminen und Dicarbonsäuren wird in dem Verfahren nach der EP-A 129 195 zuerst ein niedermolekulares Präpolymer hergestellt, das dann in fester Phase mit überhitztem Wasserdampf auf das gewünschte Molekulargewicht nachkondensiert wird.

Aufgabe der vorliegenden Erfindung war es daher, ein verbessertes Verfahren zur Herstellung von hochmolekularen Polyamiden aus Aminonitrilen oder Dinitrilen und Diaminen sowie Mischungen davon zur Verfügung zu stellen, das zu einem schnelleren Molekulargewichtsaufbau als bisher führt, und das eine geringere Wahrscheinlichkeit der Schädigung des Polymeren bei der Nachkondensation zu hohen Molekulargewichten sowie eine höhere Verarbeitungsstabilität aufweist als nach bekannten Methoden. Insbesondere sollte die Herstellung vergilbter und decarboxylierter Produkte vermieden werden und das AEG/CEG-Verhältnis nicht größer als 1,25 betragen.

Ferner sollte die Polykondensation auch in Abwesenheit eines Katalysators, der bei Polykondensation im Polymeren verbleibt und somit eine Verunreinigung darstellt, mit akzeptablen Raum-Zeit-Ausbeuten zu hohen Molekulargewichten durchführbar sein.

Demgemäß wurde ein Verfahren zur Herstellung von hochmolekularen Polyamiden aus Cyanogruppen-haltigen Monomeren durch Polymerisation in an sich bekannter Weise zu Polyamiden mit einem niedrigen Molekulargewicht und anschließende thermische Nachbehandlung zu hochmolekularen Polyamiden gefunden, indem man
(a) Monomere, ausgewählt aus der Gruppe bestehend aus Aminonitrilen der allgemeinen Formel I

   H₂N- (CH₂)ₘ-CN I

   und Mischungen von Diaminen der allgemeinen Formel II

   H₂N-(CH₂)ₙ-NH₂ II

   mit Dinitrilen der allgemeinen Formel III

   NC-(CH₂)ₚ-CN III

   wobei m, n und p ganze Zahlen von zwei bis zwölf bedeuten, mit einem Molverhältnis von Diamin/Dinitril im Bereich von 0,98:1 bis 1,02:1 in an sich bekannter Weise polymerisiert, wobei man für die erhaltenen Präpolymeren eine relative Viskosität im Bereich von 1,4 bis 2,0 (gemessen bei einer Konzentration von 1 g Präpolymer pro 100 ml in 96 gew.-%iger Schwefelsäure bei 23°C) wählt, unter Erhalt eines granulierfähigen Produktes,
(b) anschließend das unter (a) erhaltene Präpolymere granuliert, und
(c) danach das unter (b) erhaltene Granulat in fester Phase bei einer Temperatur von 5 bis 100°C unterhalb des Schmelzpunktes des Präpolymeren in Gegenwart eines Inertgases, das zu mindestens 50 Vol.-% aus überhitztem Wasserdampf besteht, zu einem hochmolekularen Polyamid mit einer relativen Viskosität im Bereich von 2,3 bis 5,0 (gemessen bei einer Konzentration von 1 g Polymer pro 100 ml in 96 gew.-%iger Schwefelsäure bei 23°C) nachkondensiert, wobei die Differenz der relativen Viskositäten zwischen dem erhaltenen Präpolymeren aus Stufe (a) und dem hochmolekularen Polyamid aus Stufe (c) mindestens 0,4 beträgt.

Geeignete Verfahren zur Herstellung der erfindungsgemäßen Polyamide sind dem Fachmann bekannt.

Als bevorzugte Herstellweise sei der Batch-Prozeß (diskontinuierliche Herstellweise) genannt. Dabei wird die wäßrige Monomerenlösung innerhalb 0,5 bis 3 h in einem Autoklaven auf Temperaturen von 220 bis 330°C erhitzt, wobei ein Druck von 15 bis 50, insbesondere 25 bis 50 bar erreicht wird, der durch Entspannen von überschüssigem Wasserdampf möglichst konstant bis zu 8 h gehalten wird. Anschließend entspannt man den Autoklaven bei konstanter Temperatur innerhalb eines Zeitraumes von 0,5 bis 2 h, bis man einen Enddruck von 1 bis 5 bar erreicht hat. Anschließend wird üblicherweise die Polymerschmelze ausgetragen, abgekühlt und granuliert.

Ein anderes bevorzugtes Verfahren ist die kontinuierliche Polykondensation.

Gemäß diesem Verfahren wird eine wäßrige Lösung der Monomeren mit einem Monomerengehalt von 30 bis 95, vorzugsweise 40 bis 90 Gew.-% unter erhöhtem Druck (5 bis 100 bar) unter Bildung eines Präpolymeren innerhalb von 10 min bis 3 h auf eine Temperatur von 220 bis 3300C erhitzt, anschließend wird entspannt, Präpolymere, Ammoniak und Dampf kontinuierlich getrennt, der Dampf rektifiziert und ggf. mitgeführte Diamine bzw. Nitrile zurückgeleitet.

Die relative Viskosität (gemessen bei einer Konzentration von 1 g Präpolymer pro 100 ml in 96 gew.-%iger Schwefelsäure bei 23°C) wählt man erfindungsgemäß im Bereich von 1,4 bis 2,0, bevorzugt von 1,5 bis 1,8.

Das Aminoendgruppen-zu-Carboxylendgruppen- (AEG/CEG)-Verhältnis der Präpolymere aus Stufe (a) ist im allgemeinen größer als 2,0, bevorzugt liegt das AEG/CEG-Verhältnis im Bereich von 10 bis 50.

Erfindungsgemäß setzt man Monomere, ausgewählt aus der Gruppe bestehend aus Aminonitrilen der allgemeinen Formel I

H₂N-(CH₂)ₘ-CN I

mit m = 2 bis 12, bevorzugt von 5 bis 12, wie 6-Amino-1-cyanpentan (Aminocapronitril), 7-Amino-1-cyanhexan, 8-Amino-1-cyanheptan, 9-Amino-1-cyanoctan, 10-Amino-1-cyannonan, 11-Amino-1-cyandecan, 12-Amino-l-cyanundecan (Aminolaurinsäurenitril), besonders bevorzugt 6-Amino-1-cyanpentan (Aminocapronitril),
und Mischungen von Diaminen der allgemeinen Formel II

H₂N-(CH₂)ₙ-NH₂ II

mit n = 2 bis 12, bevorzugt von 4 bis 12, wie Tetramethylendiamin, Pentamethylendiamin, Hexamethylendiamin, Heptamethylendiamin, Octamethylendiamin, Nonamethylendiamin, Decamethylendiamin, Undecamethylendiamin, Dodecamethylendiamin, besonders bevorzugt Hexamethylendiamin,
mit Dinitrilen der allgemeinen Formel III

NC-(CH₂)ₚ-CN III

mit p = 2 bis 12, bevorzugt von 4 bis 10 wie 1,4-Dicyanbutan (Adipodinitril, Adipinsäuredinitril), 1,5-Dicyanpentan, 1,6-Dicyanhexan, 1,7-Dicyanheptan, 1,8-Dicyanoctan, 1,9-Dicyannonan, 1,10-Dicyandecan, besonders bevorzugt 1,4-Dicyanbutan (Adipodinitril) und 1,8-Dicyanoctan, um.

Gewünschtenfalls kann man auch Diamine, Dinitrile und Aminonitrile, die sich von verzweigten Alkylen- oder Arylen- oder Alkylarylenen ableiten, verwenden.

Das Molverhältnis von Diamin zu Dinitril wählt man erfindungsgemäß im Bereich von 0,98:1 bis 1,02:1, bevorzugt von 0,99:1 zu 1,01:1.

Nach bisherigen Beobachtungen kann man die Aminonitrile der allgemeinen Formel I in einem beliebigen Verhältnis mit den Mischungen aus Diaminen der allgemeinen Formel II und Dinitrilen der allgemeinen Formel III polymerisieren oder Mischungen aus Diaminen der allgemeinen Formel II und Dinitrilen der allgemeinen Formel III allein einsetzen, bevorzugt setzt man jedoch die Aminonitrile der allgemeinen Formel I oder Mischungen von Diaminen II und Dinitrilen III alleine ein.

Gewünschtenfalls kann man Monocarbonsäuren wie Propionsäure und Benzoesäure, Monoamine wie Alkylamine, z.B. Methyl-, Ethyl-, Propyl- oder Butylamin, oder Mononitrile, wie Acetonitril, Propylnitril, Butylnitril oder Benzonitril als Kettenregler in einer Menge im Bereich von 0,01 bis 0,5 Gew.-%, bezogen auf die eingesetzten Monomeren, einsetzen.

Das Präpolymere aus Stufe (a) wird erfindungsgemäß granuliert, wobei man bevorzugt das erhaltene Präpolymere schmelzflüssig durch eine Austragszone unter gleichzeitiger Entfernung des in der Schmelze enthaltenen Restwassers leitet. Geeignete Austragszonen sind beispielsweise Entgasungsextruder. Die so weitgehend vom Wasser befreite Schmelze wird dann üblicherweise in Stränge gegossen und nach üblichen Methoden granuliert.

Die erfindungsgemäßen Granulate haben üblicherweise eine Länge im Bereich von 1 bis 10, bevorzugt von 3 bis 8 mm.

Die gewünschte relative Viskosität des hochmolekularen Polyamids wird in Stufe (c) des erfindungsgemäßen Verfahrens eingestellt. Hierzu kondensiert man erfindungsgemäß das in Stufe (b) erhaltene Granulat in fester Phase in Gegenwart eines Inertgases, das zu mindestens 50 Vol.-% aus überhitztem Wasserdampf besteht, bevorzugt reiner überhitzter Wasserdampf, kontinuierlich oder diskontinuierlich (siehe beispielsweise EP-A 284 968).

Die Temperatur bei der Festphasenkondensation wählt man zweckmäßig so, daß sie 5 bis 100, bevorzugt 20 bis 50°C unterhalb des Schmelzpunktes des entsprechenden Polyamids liegen. Im Falle von Aminocapronitril wählt man die Temperatur bevorzugt im Bereich von 130 bis 210, besonders bevorzugt von 140 bis 180, ganz besonders bevorzugt von 150 bis 170°C. Die Verweilzeit bei der Nachkondensation hängt im wesentlichen von der Art des Polyamids, der Menge des gegebenenfalls eingesetzten Kettenreglers, der gewählten Temperatur und dem gewünschten Endwert der relativen Viskosität ab. Sie liegt in der Regel im Bereich von 2 bis 48, bevorzugt von 6 bis 24, besonders bevorzugt von 12 bis 18 h.

Die für die Nachkondensation erforderliche Wärme wird erfindungsgemäß in Gegenwart von überhitztem Wasserdampf in das System eingebracht, wobei man hierfür ein Gasgemisch, bestehend aus einem Inertgas wie Stickstoff, Kohlendioxid oder Argon und zu mindestens 50 Vol.-% aus überhitztem Wasserdampf, einsetzen kann. Bevorzugt verwendet man reinen überhitzten Wasserdampf mit einem Druck von kleiner 2 bar, wobei man das Wasserdampf:Polyamid-Verhältnis bevorzugt bei mehr als 10 1 überhitzter Wasserdampf pro kg Polyamid pro Stunde wählt.

Erfindungsgemäß stellt man die relative Viskosität so ein, daß sie wenigstens 0,4 Einheiten, bevorzugt wenigstens 0,7 Einheiten höher liegt als die relative Viskosität des Präpolymeren aus Stufe (a), wobei man eine relative Viskosität im Bereich von 2,3 bis 5,0, bevorzugt von 2,4 bis 4,0 (gemessen bei einer Konzentration von 1 g Polymer pro 100 ml in 96 gew.-%iger Schwefelsäure bei 23°C) einstellt.

Für die diskontinuierliche Festphasenkondensation kann man beispielsweise Taumeltrockner, für die kontinuierliche Festphasenkondensation Temperrohre verwenden, wobei man die kontinuierliche Festphasenkondensation bevorzugt einsetzt.

Den Polyamiden können in einem nachfolgenden Konfektionierungsschritt die üblichen Hilfs- und Zusatzmittel wie Verstärkungsfasern, mineralische Füllstoffe, Zähmodifier, Gleit-und Entformungsmittel, Stabilisatoren gegen thermische und UV-Schädigung, Flammschutzmittel, Pigmente, Farbstoffe und Nukleierungsmittel in Mengen bis zu 70 Gew.-%, bezogen auf das konfektionierte Produkt, zugesetzt werden.

Im Falle der kontinuierlichen Polykondensation können die Additive alternativ auch mit Hilfe eines Austragsextruders dem erfindungsgemäßen Präpolymeren eingemischt werden und dann anschließend der Stufe c) unterworfen werden.

Die hochmolekularen Polyamide kann man zu Formkörpern, Folien und zu Fasern nach üblichen Methoden weiterverarbeiten.

Das erfindungsgemäße Verfahren hat gegenüber bekannten Verfahren den Vorteil, daß der Molekulargewichtsaufbau schneller erfolgt, die hochmolekularen Polyamide nach dem erfindungsgemäßen Verfahren weniger bis keine Schädigungen, insbesondere durch Vergilbung oder Decarboxylierung, und ein AEG/CEG-Verhältnis von nicht größer als 1,25 aufweisen.

### Beispiele

Die Bestimmung der Carboxylendgruppen erfolgte durch acidimetrische Titration (Doppelbestimmung). Hierzu wurden zunächst Blindwert und Faktor bestimmt, dann die Messung mit dem zu untersuchenden Polyamid wiederholt und hieraus der Endgruppengehalt ermittelt.

Zur Bestimmung des Blindwertes wurden 30 ml destillierter Benzylalkohol auf einer Heizplatte unter Zugabe von einigen Glas-Siedekugeln 15 Minuten am Rückfluß gekocht und anschließend heiß nach Zugabe von 6 Tropfen Indikator (50 mg Kresolrot in 50 ml n-Propanol p.A. gelöst) mit der Titrierlösung (80 ml 0,5 m methanolische KOH-Lösung/860 ml n-Propanol mit Hexanol auf 2000 ml aufgefüllt) bis zum Umschlag (gelb-grau) titriert.

Zur Bestimmung des Faktors wurde der Versuch wiederholt, mit dem Unterschied, daß 0,015 g AH-Salz zum Benzylalkohol zugegeben wurden. Der Faktor errechnete sich aus Einwaage AH-Salz : [Verbrauch - Blindwert: 131.2].

Zur Probenbestimmung wurde der Versuch mit 0,5 g des zu untersuchenden Polyamids wiederholt.

Aus [Verbrauch - Blindwert] x Faktor : Einwaage errechnete sich dann der Carboxylendgruppengehalt in mmol/kg.

Die Bestimmung der Aminoendgruppen erfolgte durch acidimetrische Titration (Doppelbestimmung). Hierzu wurden zunächst Blindwert und Faktor bestimmt, dann die Messung mit dem zu untersuchenden Polyamid wiederholt und hieraus der Endgruppengehalt ermittelt.

Zur Bestimmung des Blindwertes wurden 25 ml eines Lösungsmittelgemisches (1000 g Phenol p.A./540 g Methanol p.A./1 ml 0,1 m methanolische KOH-Lösung) auf einer Magnetrührplatte bei 150 bis 160°C 25 Minuten am Rückfluß gekocht. Nach dem Abkühlen des Gemisches auf Handwärme wurden 2 Tropfen Indikator (0,1 g Benzylorange/10 ml Methanol p.A. mit Ethylenglykol auf 100 ml aufgefüllt + 500 mg Methylenblau/5 ml Methanol p.A. mit Ethylenglykol auf 50 ml aufgefüllt) zum Lösungsmittelgemisch zugegeben und mit der Titrierlösung (3,44 ml 70 gew.-%ige Perchlorsäure/200 ml Methanol p.A. mit Ethylenglykol auf 2000 ml aufgefüllt) bis zum Umschlag (grün-grau) titriert.

Zur Faktorbestimmung wurde der Versuch mit 25 ml Faktorlösung (0,16 g getrocknetes AH-Salz gelöst in 500 ml Lösungsmittelgemisch) anstelle des reinen Lösungsmittelgemisches wiederholt. Der Faktor errechnete sich dann aus Einwaage AH-Salz: [Verbrauch - Blindwert: 131.2].

Zur Probenbestimmung wurde der Versuch mit 0,5 g des zu untersuchenden Polyamids, gelöst in 25 ml des Lösungsmittelgemisches, wiederholt.

Aus [Verbrauch - Blindwert] x Faktor : Einwaage errechnete sich dann der Aminoendgruppengehalt in mmol/kg.

### 1. Herstellung der Ausgangsprodukte

### Beispiel A

2,5 Mol Aminocapronitril ACN (280 g; Reinheit > 99,8 %) wurden mit 10 Mol H₂O (90 g) und 5 mmol phosphoriger Säure als Katalysator in einen 1 1 - Laborautoklaven vorgelegt. Wieder wurde 3x evakuiert und mit Stickstoff befüllt. Anschließend wurde während 1 h auf 220°C geheizt, wobei der Druck ab dem Erreichen von 20 bar durch Entspannen von überschüssigem Wasserdampf und Ammoniak konstant gehalten wurde. Diese Temperatur wurde 2 h gehalten, dann wurde die Temperatur während 1 auf 270°C erhöht, während der Druck nach wie vor auf 20 bar gehalten, dann wurde die Temperatur während 1 h auf 270°C erhöht, während der Druck nach wie vor auf 20 bar gehalten wurde. Dann wurde während 20 min auf Normaldruck entspannt und das Produkt ausgetragen, verstrangt, in Wasser abgekühlt und granuliert. Es wurde ein Zylindergranulat von ca. 4 mm Länge und 2 bis 3 mm Durchmesser erhalten.

### Beispiel B

Wie A, aber ohne Katalysator.

### Beispiel C

Wie B, aber mit 5 Mol H₂O.

### 2. Nachkondensation

2,5 g - Proben der Granulate (lockere Schüttung) wurden in einem Glasrohr von ca. 10 mm Innendurchmesser, das in ein Ölbad von 170°C getaucht war, bei Normaldruck mit 60 g/h überhitztem Wasserdampf von 170°C durchströmt. In Vergleichsversuchen wurde auch trockener Stickstoff verwendet bzw. Vakuum (Ölpumpe, < 1 mbar) angelegt, die Temperatur war jeweils 170°C.

In einem weiteren Vergleichsversuch wurde eine 2,5 g - Probe auf dem Boden eines 50 ml Erlenmeyer - Kolbens im Ölbad bei 250°C aufgeschmolzen (Schichtdicke etwa 2 - 3 mm) und mit 60 g/h überhitztem Wasserdampf (250°C) überströmt.

Die Ergebnisse sind in der Tabelle dargestellt. Die an den Proben vor Nachkondensation gemessenen Werte sind als Versuch 0 dargestellt.

Die Werte zeigen, daß nur durch Festphasenkondensation mit Wasserdampf schneller Molekulargewichtsaufbau und hohes Endmolekulargewicht erreicht werden. Mit Stickstoff bzw. Vakuum als Tempermedium werden keine technisch brauchbaren Molekulargewichte erreicht, durch Behandlung einer Polymerschmelze mit überhitztem Wasserdampf (die Temperatur des Dampfes muß in diesem Fall natürlich über dem Schmelzpunkt des Polyamides liegen) werden langsame Molekulargewichtsanhebung, Vergilbung sowie Decarboxylierung (erkennbar am Absinken der CEG gegenüber AEG) beobachtet.

Die relative Viskosität (RV) wurde bei einer Konzentration von 1 g Polymer pro 100 ml in 96 gew.-%iger Schwefelsäure bei 23°C bestimmt.

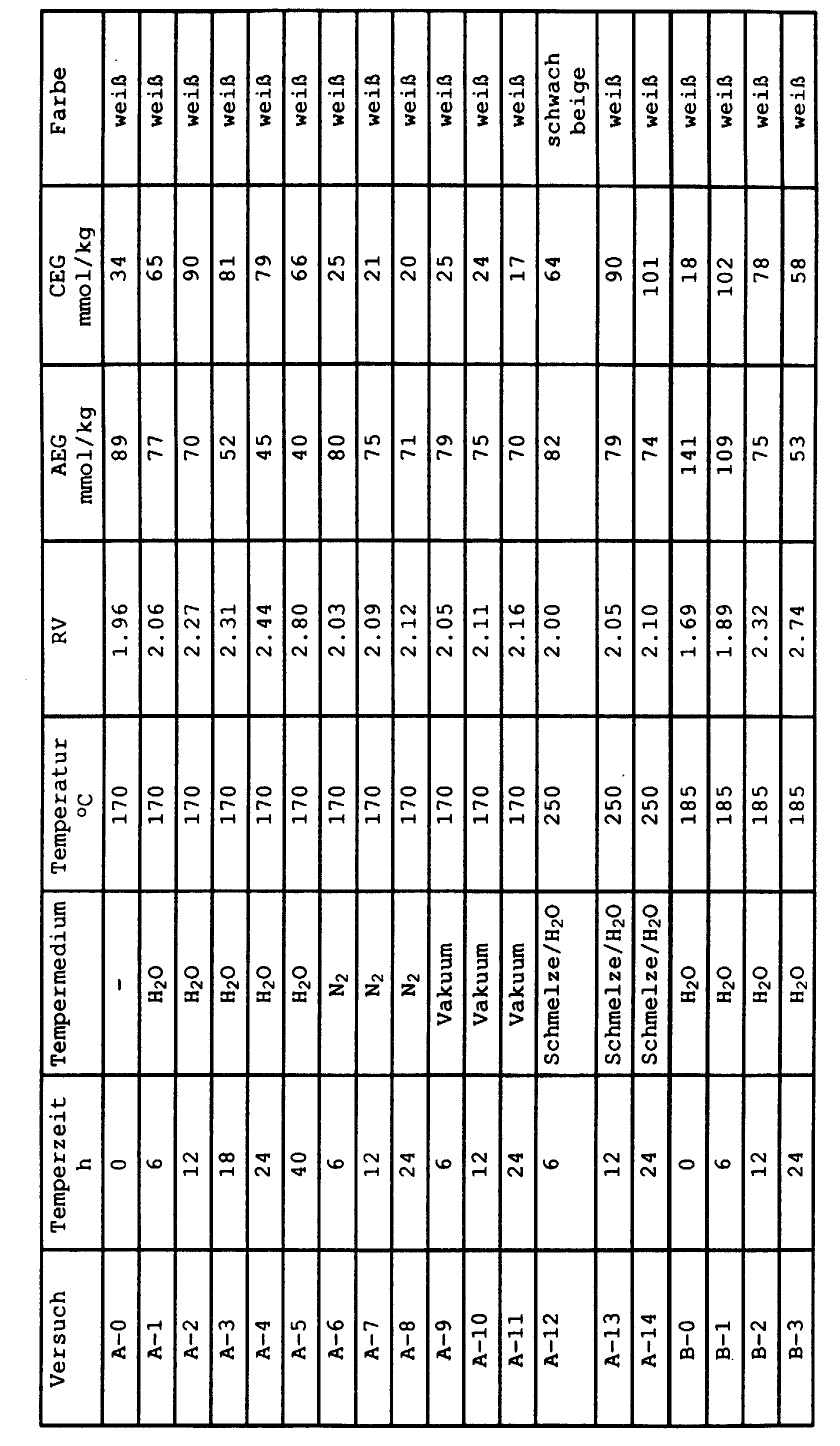

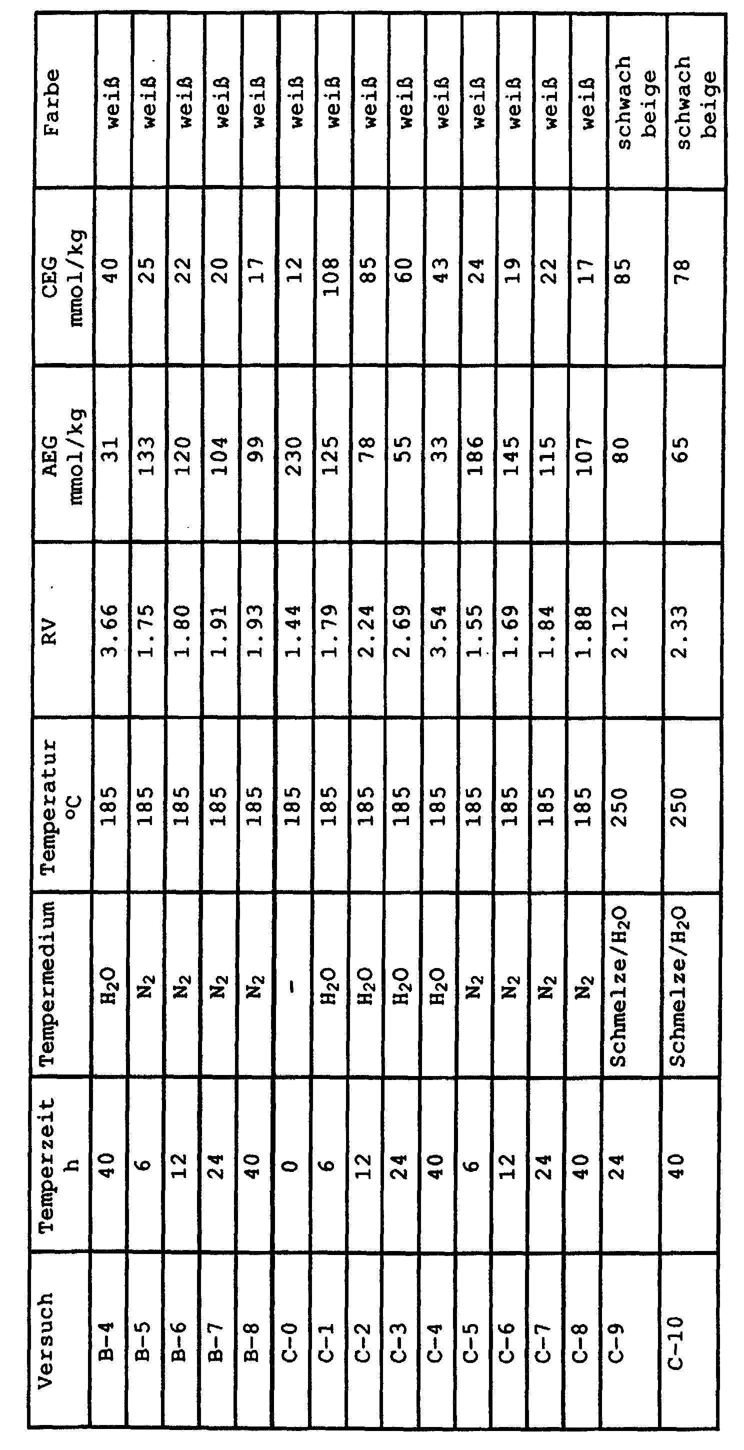

## Patentansprüche

1. Verfahren zur Herstellung von hochmolekularen Polyamiden aus Cyano- und/oder Aminogruppen-haltigen Monomeren durch Polymerisation in an sich bekannter Weise zu Polyamiden mit einem niedrigen Molekulargewicht und anschließende thermische Nachbehandlung zu hochmolekularen Polyamiden, dadurch gekennzeichnet, daß man
(a) Monomere, ausgewählt aus der Gruppe bestehend aus Aminonitrilen der allgemeinen Formel I
H₂N-(CH₂)ₘ-CN I
und Mischungen von Diaminen der allgemeinen Formel II
H₂N-(CH₂)ₙ-NH₂ II
mit Dinitrilen der allgemeinen Formel III
NC-(CH₂)ₚ-CN III
wobei m, n und p ganze Zahlen von zwei bis zwölf bedeuten, mit einem Molverhältnis von Diamin/Dinitril im Bereich von 0,98:1 bis 1,02:1 in an sich bekannter Weise polymerisiert, wobei man für die erhaltenen Präpolymeren eine relative Viskosität im Bereich von 1,4 bis 2,0 (gemessen bei einer Konzentration von 1 g Präpolymer pro 100 ml in 96 gew.-%iger Schwefelsäure bei 23°C) wählt, unter Erhalt eines granulierfähigen Produktes,
(b) anschließend das unter (a) erhaltene Präpolymere granuliert, und
(c) danach das unter (b) erhaltene Granulat in fester Phase bei einer Temperatur von 5 bis 100°C unterhalb des Schmelzpunktes des Präpolymeren in Gegenwart eines Inertgases, das zu mindestens 50 Vol.-% aus überhitztem Wasserdampf besteht, zu einem hochmolekularen Polyamid mit einer relativen Viskosität im Bereich von 2,3 bis 5,0 (gemessen bei einer Konzentration von 1 g Polymer pro 100 ml in 96 gew.-%iger Schwefelsäure bei 23°C) nachkondensiert, wobei die Differenz der relativen Viskositäten zwischen dem erhaltenen Präpolymeren aus Stufe (a) und dem hochmolekularen Polyamid aus Stufe (c) mindestens 0,4 beträgt.

## Claims

1. A process for the preparation of high molecular weight polyamides from cyano- or amino-containing monomers by polymerization in a manner known per se to give polyamides having a low molecular weight and subsequent thermal aftertreatment to give high molecular weight polyamides, which comprises
(a) polymerizing monomers selected from the group consisting of aminonitriles of the formula I
H₂N-(CH₂)ₘ-CN I
and mixtures of diamines of the formula II
H₂N-(CH₂)ₙ-NH₂ II
with dinitriles of the formula III
NC-(CH₂)ₚ-CN III
where m, n and p are integers from two to twelve, in a molar diamine/dinitrile ratio of from 0.98:1 to 1.02:1 in a manner known per se, a relative viscosity from 1.4 to 2.0 (measured at a concentration of 1 g of prepolymer per 100 ml in 96% strength by weight sulfuric acid at 23°C) being chosen for the resulting prepolymers, to give a product capable of being granulated,
(b) then granulating the prepolymer obtained under (a) and
(c) then subjecting the granules obtained under (b) to solid-phase postcondensation at from 5 to 100°C below the melting point of the prepolymer in the presence of an inert gas which contains at least 50% by volume of superheated steam to give a high molecular weight polyamide having a relative viscosity of from 2.3 to 5.0 (measured at a concentration of 1 g of polymer per 100 ml in 96% strength by weight sulfuric acid at 23°C), the difference between the relative viscosity of the resulting prepolymer from stage (a) and that of the high molecular weight polyamide from stage (c) being at least 0.4.

## Revendications

1. Procédé de préparation de polyamides de poids moléculaires élevés à partir de monomères contenant des radicaux cyano et/ou amino, par polymérisation, d'une manière en soi connue, en polyamides d'un poids moléculaire inférieur, suivie d'un traitement thermique subséquent en polyamides de poids moléculaires élevés, caractérisé en ce que
(a) on polymérise, de manière en soi connue, des monomères choisis dans le groupe constitué d'aminonitriles de la formule générale I
H₂N-(CH₂)ₘ-CN I
et de mélanges de diamines de la formule générale II
H₂N-(CH₂)ₙ-NH₂ II
avec des dinitriles de la formule générale
NC-(CH₂)ₚ-CN III
formules dans lesquelles m, n et p représentent des nombres entiers dont la valeur varie de deux à douze, avec un rapport molaire diamine/dinitrile qui varie de 0,98:1 à 1,02:1, où on choisit pour les prépolymères obtenus une viscosité relative dans la plage de 1,4 à 2,0 (mesurée à la concentration de 1 g de prépolymère par 100 ml dans l'acide sulfurique à 96% en poids et à 23°C), sous obtention d'un produit susceptible d'être granulé,
(b) on granule ensuite le prépolymère obtenu en (a) et
(c) on postcondense ensuite le granulé obtenu en (b) en phase solide et à une température de 5 à 100°C inférieure au point de fusion du prépolymère, en présence d'un gaz inerte, qui se compose pour au moins 50% en volume de vapeur d'eau surchauffée, en un polyamide de poids moléculaire élevé possédant une viscosité relative qui varie de 2,3 à 5,0 (mesurée à la concentration de 1 g de polymère par 100 ml dans l'acide sulfurique à 96% en poids et à 23°C), où la différence des viscosités relatives entre le prépolymère obtenu au cours de l'étape (a) et le polyamide de poids moléculaire élevé obtenu au cours de l'étape (c) atteint au moins 0,4.
